# EUROPÄISCHE PATENTSCHRIFT

(11) **EP 2 978 942 B1**
(45) Veröffentlichungstag und Bekanntmachung des Hinweises auf die Patenterteilung: **19.02.2025**
(21) Anmeldenummer: 14711990.3
(22) Anmeldetag: 25.03.2014
(51) Int. Cl.: F01D 25/28, F04D 29/60, F16M 5/00

(54) **KRAGTRÄGERSCHLITTEN FÜR MONTAGE UND DEMONTAGE EINES ROTORBLOCKS**
CANTILEVER SLIDING CARRIAGE FOR ASSEMBLY AND DISASSEMBLY OF A ROTOR BLOCK
CHARIOT DE SUPPORT CANTILEVER POUR MONTAGE ET DÉMONTAGE D'UN BLOC ROTOR

(30) Priorität: 28.03.2013 EP 13161751
(43) Veröffentlichungstag der Anmeldung: 03.02.2016
(73) Patentinhaber: Accelleron Switzerland Ltd., 5400 Baden (CH)
(72) Erfinder: LANNI, Fabrizio, CH-8330 Pfäffikon (CH); JARUSEL, Matthias, 79774 Albbruck (DE); PROBST, Reiner, 79787 Lauchringen (DE); RODER, Rudolf, CH-3600 Thun (CH); BAUMGARTNER, Hans, CH-3053 Münchenbuchsee (CH)
(74) Vertreter: Zimmermann & Partner Patentanwälte mbB
(86) Internationale Anmeldenummer: PCT/EP2014/055914
(87) Internationale Veröffentlichungsnummer: WO 2014/154663

(56) Entgegenhaltungen:
- EP-A1- 2 610 439
- EP-A2- 0 460 457
- EP-B1- 0 460 457
- DE-A1- 10 215 409
- DE-A1- 2 146 995
- DE-B2- 2 146 995
- JP-A- H10 220 399
- US-A- 2 803 429
- US-A- 4 635 336
- US-A- 5 313 696
- US-A1- 2003 014 961
- US-A1- 2011 052 426
- US-A1- 2012 034 059

## Beschreibung

### Technisches Gebiet

Die Erfindung bezieht sich auf das Gebiet der Rotationsmaschinen. Sie betrifft eine Hebevorrichtung sowie ein Verfahren zum Verschieben eines Rotorblocks in einem Gehäuse entlang der Drehachse des im Rotorblock enthaltenen Rotors.

Derartige Hebevorrichtungen werden als Montage/ Demontagewerkzeuge bei Abgasturboladern von aufgeladenen Brennkraftmaschinen oder vergleichbaren Rotationsmaschinen eingesetzt, bei welchen der Rotorblock ein Gewicht über hundert Kilogramm bis zu mehreren Tonnen aufweisen kann.

### Stand der Technik

Abgasturbolader werden zum Aufladen von grossen Brennkraftmaschinen eingesetzt. Diese treiben beispielsweise Meeresschiffe oder grosse Notstromaggregate an.

Um den Abgasturbolader im Intervall von einigen tausend Arbeitsstunden zu warten, müssen die rotierenden Teile aus dem Gehäuse entnommen werden. Hierfür werden bei herkömmlichen Abgasturboladern die mehrteiligen Gehäuse entfernt und anschliessend der Rotor mithilfe eines Krans in axialer Richtung aus dem Gehäuse gehoben. Konkret wird zur Demontage eines Abgasturboladers in der Regel das Verdichtergehäuse entfernt, um mit einem Ausleger des Krans oberhalb des Schwerpunkts des Rotorblocks angreifen zu können.

Der Rotorblock eines Abgasturboladers umfasst neben den rotierenden Teilen der Welle und der mit der Welle verbundenen Turbinen- und Verdichterräder auch die Lagerteile, also Axial- und Radiallager sowie innere Lagergehäuseteile. Dieser Rotorblock wird auch als Cartridge bezeichnet. Im Servicefall besteht die Möglichkeit, ein Cartridge eines Abgasturboladers vollständig auszutauschen. Dadurch verringert sich die Stillstandzeit des Abgasturboladers und damit der mittels des Abgasturboladers aufgeladenen Brennkraftmaschine. Weiter verringern lässt sich der Aufwand für den Ausbau und das Wiedereinsetzen des Cartridges, wenn möglichst wenige Gehäuseteile entfernt werden müssen. Beispielsweise wäre es wünschenswert, das äussere Verdichtergehäuse, welches mit seinem grossen Luftaustrittsstutzen fest in das Rohrsystem der Brennkraftmaschine integriert ist, genauso wie das gesamte Turbinengehäuse während den Wartungsarbeiten nicht abbauen zu müssen. Somit müsste lediglich das lufteintrittsseitige, innere Verdichtergehäuse entfernt werden, um den Rotorblock durch die dadurch freigegebene Axialöffnung aus dem Verdichtergehäuse und dem dahinterliegenden Lagergehäuse und Gasaustrittsgehäuse ziehen zu können.

Verschiedene Vorrichtungen und Verfahren zum Ziehen und/ oder Einsetzen von Rotoren, Rotorblöcken oder Lagerbestandteilen aus einem Gehäuse sind im Stand der Technik beschrieben.

JP10-220399 offenbart beispielsweise eine Vorrichtung zur Demontage eines Rotors einer Pumpe, bei welcher auf die Wellenvorsätze Verlängerungsstücke gesteckt werden, welche auf einer Abstützung verschiebbar gelagert sind und mit deren Hilfe der Rotor aus dem Gehäuse geschoben werden kann, damit er anschliessend von einem Kran gehoben werden kann.

US2011/0052426A1 offenbart eine Vorrichtung zur Demontage eines Rotors eines grossen Kompressors, welche eine beidseitige Abstützung des Rotors umfasst, wobei auf der Rückseite des Rotors Verlängerungselemente vorgesehen sind, um die Abstützung während des Herausschiebens des Rotors aus dem Gehäuse sicherzustellen. Die Vorrichtung umfasst weiter Schienenelemente, entlang deren der auszubauende Rotor verschoben werden kann. Insbesondere betrifft die US2011/0052426A1 ein Einführ-/Entnahmesystem für ein Kompressorgehäuse und ein Kompressorbündel. Das System umfasst ein Gerüst, das sich von einem ersten axialen Ende des Kompressorgehäuses erstreckt und so konfiguriert ist, dass es das Kompressorbündel während des Einsetzens stützt. Das System umfasst weiter eine Service-End-Rollenanordnung, die mit dem Kompressorbündel proximal zu einem axialen Ende des Kompressorbündels gekoppelt ist, wobei die Service-End-Rollenanordnung so konfiguriert ist, dass sie eine bewegliche Unterstützung für das Kompressorbündel auf dem Gerüst bereitstellt.

### Kurze Darstellung der Erfindung

Die Aufgabe der vorliegenden Erfindung besteht darin, ein Werkzeug und ein Verfahren zu schaffen, welches den Ausbau eines Rotorblocks aus einem den Rotorblock umfassenden Gehäuse entlang der Drehachse des im Rotorblock enthaltenen Rotors ermöglicht.

Ein Aspekt der Erfindung betrifft eine Hebevorrichtung gemäß dem unabhängigen Anspruch 1. Eine Hebevorrichtung umfasst einen Kragträger, der an einem Vertikalanschlag, also an einer axialen Stirnseite, des Gehäuses befestigt ist, und auf welchem ein entlang des Kragträgers verschiebbarer Aufbau angeordnet ist, welcher ebenfalls an einem Vertikalanschlag, also einer axialen Stirnseite des Rotorblocks befestigt ist.

Die lineare Bewegung des Aufbaus auf dem Kragträger erfolgt durch Linearführungen (Schienen) und wird optional mit Kugellagern ausgestattet.

Der Aufbau der Hebevorrichtung ist auf einem Schlitten angeordnet, wobei die Auflage des Aufbaus zweiteilig ist und eine Kippstange und eine vertikale Befestigung umfasst, wodurch sich der Aufbau bezüglich der Lage des Kragträgers neigen lässt.

Optional kann als Antrieb der Verschiebung entlang des Kragträgers eine Trapezgewindespindel, die wahlweise per Hand oder Akkuschrauber bewegt wird vorgesehen sein.

Optional kann über Gewindeschrauben die Höhe und Neigung des Rotorblocks justiert werden.

Die erfindungsgemässe Hebevorrichtung weist keine weiteren Abstützungen auf und benötigt lediglich den Bauraum des Filterschalldämpfers. Insbesondere wird der Bauraum oberhalb des Gehäuses des Abgasturboladers während dem Ausbau und dem Wiedereinsetzen des Rotorblocks nicht benutzt, wodurch Isolationen, Rohrleitungen usw. nicht beeinträchtigt werden.

Weitere Vorteile ergeben sich aus den abhängigen Ansprüchen.

Ein weiterer Aspekt der Erfindung betrifft ein Verfahren gemäß dem unabhängigen Anspruch 9.

### Kurze Beschreibung der Zeichnungen

Anschliessend sind anhand der Zeichnungen Ausführungsformen der erfindungsgemässen Hebevorrichtung erläutert. Hierbei zeigt
- Fig. 1: eine schematische Darstellung eines entlang der Wellenachse (A) geführten Schnitts durch einen Abgasturbolader, wobei der Abgasturbolader einen in axialer Richtung zur Verdichterseite hin aus dem Gehäuse ausziehbaren Rotorblock umfasst,
- Fig. 2: eine isometrische Ansicht eines Abgasturboladers nach Fig. 1 mit aufgesetzter, erfindungsgemässer Hebevorrichtung gemäss einer ersten Ausführungsform und teilweise aus dem Gehäuse ausgezogenem Rotorblock,
- Fig. 3: eine schematische Darstellung eines entlang der Wellenachse geführten Schnitts durch den Abgasturbolader samt Hebevorrichtung nach Fig. 2,
- Fig. 4: eine schematische Darstellung eines vergrössert dargestellten Schnitts durch die Hebevorrichtung nach Fig. 2 und 3,
- Fig. 5: eine seitliche Ansicht eines Abgasturboladers nach Fig. 1 mit aufgesetzter, erfindungsgemässer Hebevorrichtung gemäss einer zweiten Ausführungsform und teilweise aus dem Gehäuse ausgezogenem Rotorblock ,
- Fig. 6: eine schräge Ansicht der Anordnung nach Fig. 5,
- Fig. 7: eine isometrische Ansicht des Aufbaus der Hebevorrichtung, und
- Fig. 8: eine isometrische Ansicht des Kragträgers der Hebevorrichtung und der Montagekonsole zur Befestigung des Kragträgers am Gehäuse eines Abgasturboladers. Weg zur Ausführung der Erfindung

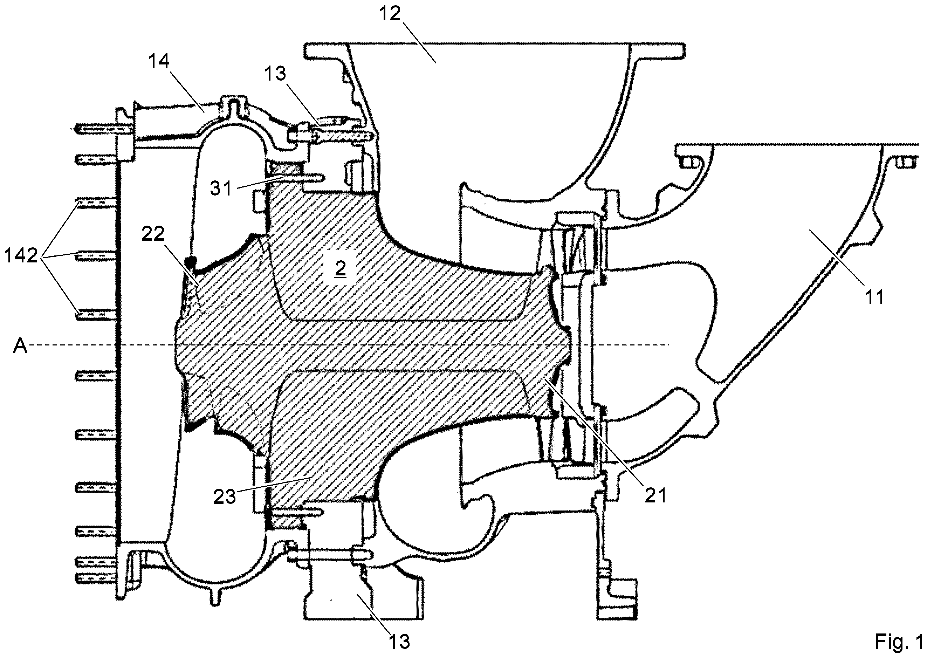

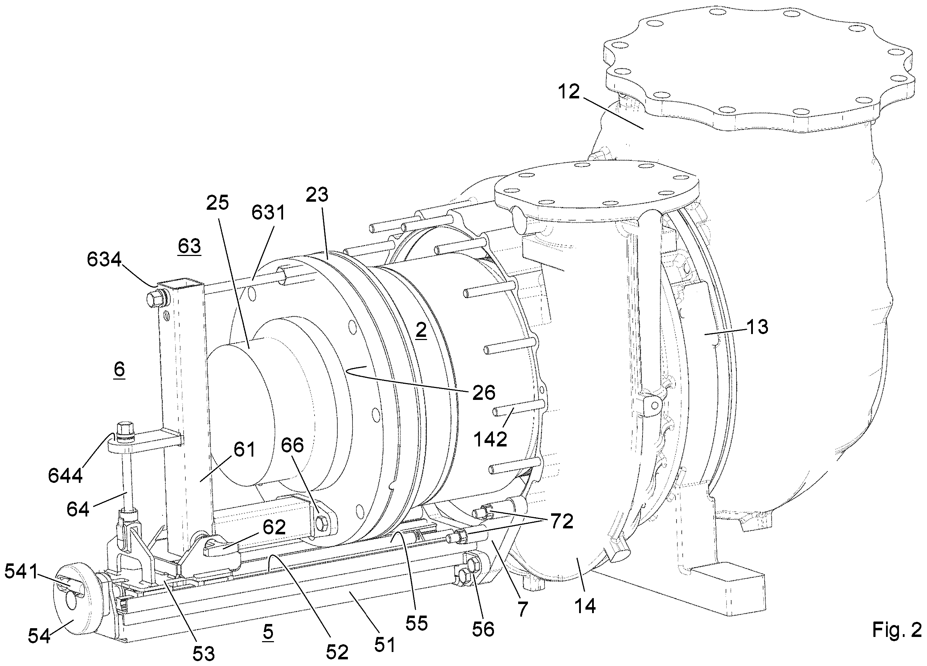

Fig. 1 und Fig. 2 zeigen einen Abgasturbolader wie er typischerweise zur Aufladung von grossen Brennkraftmaschinen eingesetzt wird. Er umfasst eine axial angeströmte Abgasturbine sowie einen Radialverdichter.

Das Gehäuse des Abgasturbolader setzt sich im wesentlichen aus fünf Gehäuseteilen zusammen. Axial in der Mitte ist das äussere Lagergehäuse 13 angeordnet. Das Lagergehäuse steht in der Regel auf einer Konsole welche an der Brennkraftmaschine angeordnet ist.

Turbinenseitig ist am Lagergehäuse das Gasaustrittsgehäuse 12 und daran wiederum das Gaseintrittsgehäuse 11 befestigt. Das Gaseintrittsgehäuse 11 führt den heissen Abgasstrom vom Gaseintritt auf die Laufschaufeln des Turbinenrades 21, wobei der Strömungskanal durch das Gaseintrittsgehäuse von der Kreisrohrform am Gaseintritt in eine Ringrohrform im Anströmbereich der Turbinenschaufeln umgelenkt wird. Das Gasaustrittsgehäuse 12 weist einen grossen, spiralförmigen Sammelraum auf und mündet in den Gasaustritt, von wo aus die Abgase beispielsweise auf die Auspuffanlage oder eine nachgeschaltete, zweite Turbinenstufe geleitet werden.

Verdichterseitig schliesst das äussere Verdichtergehäuse 14 ans äussere Lagergehäuse 13 an. Das äussere Verdichtergehäuse umfasst im wesentlichen einen spiralförmigen Sammelraum welcher in den Luftaustritt mündet. Der Luftaustritt des Verdichters ist ebenso wie turbinenseitig der Gaseintritt und der Gasaustritt dauerhaft an das Röhrensystem der Brennkraftmaschine angeschlossen und die jeweiligen Flanschbefestigungen sollten im Regelfall nicht gelöst werden müssen. Das fünfte Gehäuseteil, das innere Verdichtergehäuse, ist in den Fig. 1 und 2 nicht dargestellt. Das innere Verdichtergehäuse ist einerseits mittels der Befestigungsbolzen 142 am äusseren Verdichtergehäuse 14 befestigt, andererseits stellt es die Verbindung zum Lufteintritt dar.

Der Lufteintritt kann entweder durch einen aufgesetzten Filterschalldämpfer oder durch einen rohrförmigen Ansaugstutzen realisiert sein. Diese Verbindung ist im Servicefall die Einzige, welche regelmässig getrennt werden muss. Einerseits muss der Filterschalldämpfer selber regelmässig gewartet werden, andererseits bildet die durch das entfernte innere Verdichtergehäuse freigelegte Öffnung die Wartungsluke, durch welche der Rotorblock des Abgasturboladers aus dem Gehäuse gezogen werden kann.

Wie die Darstellung erahnen lässt, befindet sich der Schwerpunkt des Rotorblocks 2, welcher neben dem eigentlichen Rotor mit Turbinenrad 21, Welle und Verdichterrad 22 auch den inneren Lagerbereich 23 umfasst, axial irgendwo im Bereich des Lagergehäuses. Um den Rotor mit einem direkt am Rotorblock angreifenden Kran aus der Gehäuseöffnung heben zu können, müsste somit das äussere Verdichtergehäuse 14 ebenfalls vom äusseren Lagergehäuse 13 demontiert werden. Dieser zusätzliche Aufwand soll mit dem nachfolgend beschriebenen, erfindungsgemässen Montage- und Demontagewerkzeug eingespart werden können.

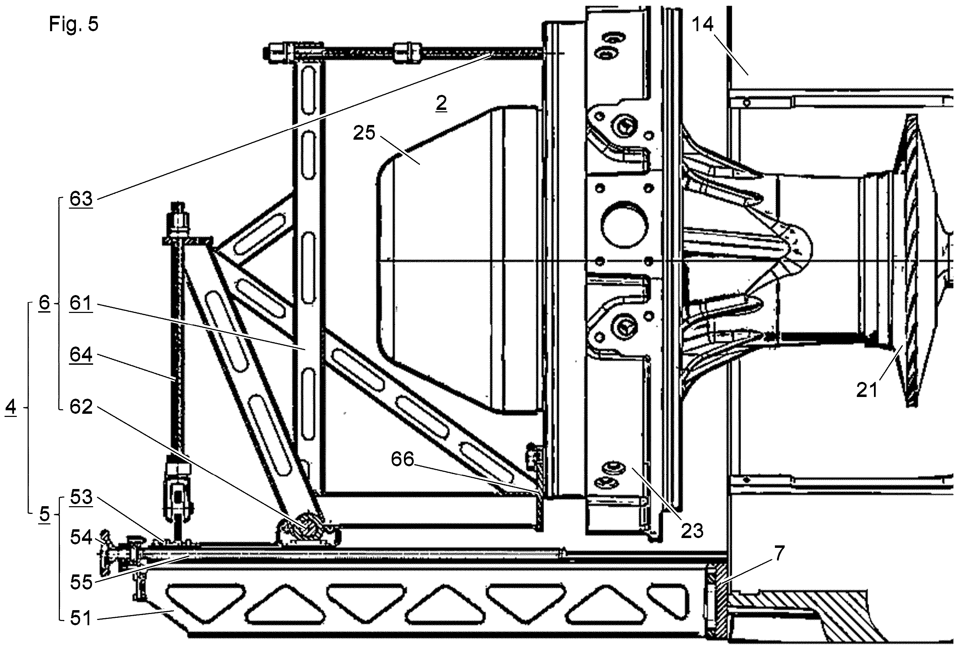

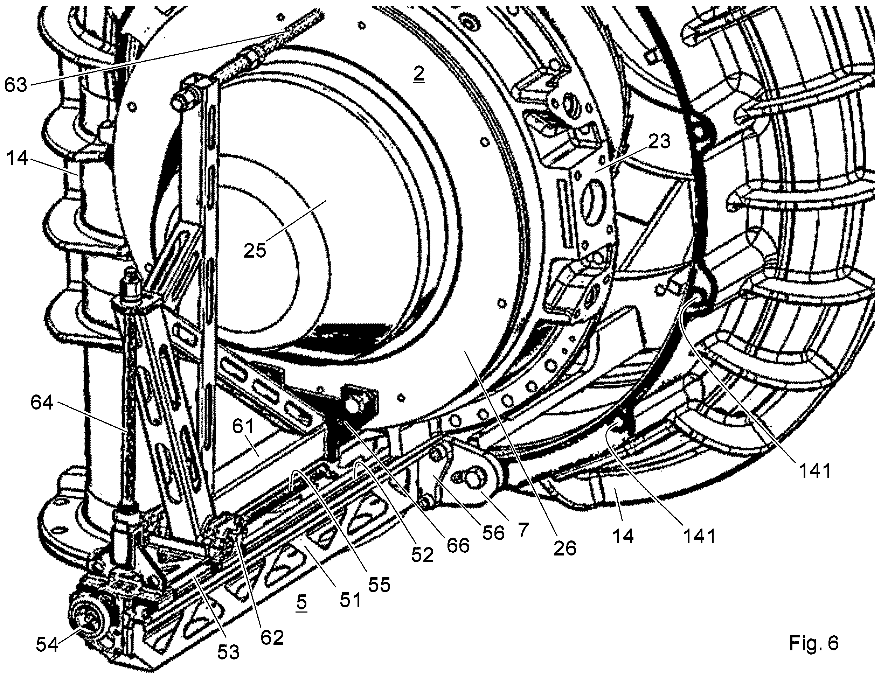

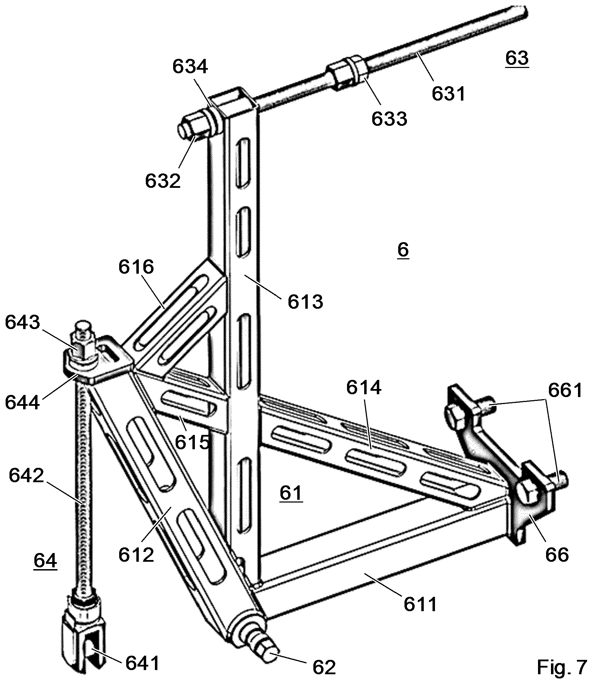

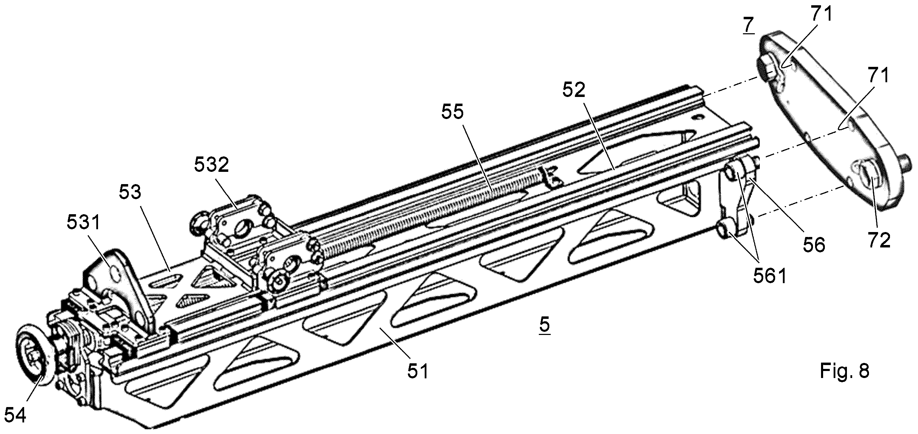

Fig. 2, Fig. 3 und Fig. 4 zeigen eine erste Ausführungsform der erfindungsgemässen Hebevorrichtung 4 im Einsatz. Fig. 5 und Fig. 6 zeigen eine zweite Ausführungsform der erfindungsgemässen Hebevorrichtung 4 im Einsatz. Die einzelnen Bestandteile der zweiten Ausführungsform der Hebevorrichtung 4 sind in Fig. 7 und Fig. 8 im Detail dargestellt.

Die Hebevorrichtung 4 umfasst in beiden Ausführungsformen zwei Hauptbestandteile, einen Kragträger 5 (engl. Cantilever) sowie einen darauf verschiebbaren Aufbau 6. Ein Kragträger (in der Literatur auch als *Kragbalken* oder *Kragarm* bekannt) ist allgemein ein einseitig gelagerter, waagrechter Balken, welcher eine Last trägt. Der Kragbalken weist ein einziges Auflager auf. Der Kragbalken kann im allgemeinen auf Schub, Biegung und Torsion beansprucht werden, wobei das Auflager alle sechs Freiheitsgrade (Kräfte und Momente) fixiert. Im vorliegenden Fall des Kragträgers 5 der erfindungsgemässen Hebevorrichtung 4 ist der waagrechte Balken ein Tragrahmen 51 und eine Montageplatte 56 an einem Ende des Tragrahmens dient als Auflager am äusseren Verdichtergehäuse 14. Das Verdichtergehäuse weist entlang dem Umfang verteilt angeordnete Befestigungslöcher 141 zur Aufnahme der in Fig. 1 gezeigten Befestigungsbolzen 142. Die Befestigungslöcher sind in eine Vertikalfläche des äusseren Verdichtergehäuses eingelassen, so dass sich ein Vertikalanschlag bildet, welcher zur Befestigung des inneren Verdichtergehäuses und, im Montage/ Demontagefall, des Kragbalkens 5 der erfindungsgemässen Hebevorrichtung 4 dient.

Zur vereinfachten Montierbarkeit des Kragbalkens am äusseren Verdichtergehäuse 14 und vor allem um die Portierbarkeit des Kragbalkens für Abgasturbolader verschiedener Baugrössen zu gewährleisten, kann eine Montagekonsole 7 zwischen der Montageplatte 56 des Kragträgers und dem Vertikalanschlag des Verdichtergehäuses vorgesehen sein. Optional könnte der Kragträger aber auch direkt auf das äussere Verdichtergehäuse geschraubt werden. Die Montagekonsole 7 wird mit Befestigungsmitteln 72 auf den Vertikalanschlag des äusseren Verdichtergehäuses geschraubt, wobei vorteilhafterweise die oben erwähnten Befestigungslöcher 141 genutzt werden. Optional könnten auch eigens dafür vorgesehene Löcher für die Befestigung der Montagekonsole 7 genutzt werden. In die Montagekonsole 7 sind Befestigungslöcher 71 zur Aufnahme von Befestigungsmitteln 561 der Montageplatte 56 des Kragbalkens 5 eingelassen. Optional könnte die Montageplatte des Kragbalkens auch auf andere Weise mit der Montagekonsole verbunden werden, beispielsweise durch eine formschlüssige Steckverbindung.

Der Aufbau 6, das zweite Bestandteil der Hebevorrichtung, umfasst eine Konstruktion 61 aus Profilstangen, welche der Aufnahme und Übertragung von Kräften auf den Kragträger dient. Die Grundaufgabe des Aufbaus der erfindungsgemässen Hebevorrichtung besteht darin, den Rotorblock zu greifen um ihn entlang der Erstreckung des Tragrahmens des Kragträgers und relativ zum Gehäuse zu verschieben. Hierfür ist der Aufbau 6 auf einem Schlitten 53 aufgesetzt, welcher wiederum auf Schienen 52 entlang des Tragrahmens 51 verschiebbar ist. Optional kann der Schlitten 53 mittels einer Trapezgewindespindel, die wahlweise über ein Spindelrad 54 mit einer Kurbel 541 per Hand oder per Akkuschrauber bewegt wird, entlang der Schienen 52 des Kragträgers geführt werden. Dies erlaubt eine kontinuierliche, langsame Verschiebung des Aufbaus und des daran befestigten Rotorblocks.

In einer einfachen Form könnte der Aufbau selber direkt entlang einer Schiene am Kragträger geführt sein, solange die Übertragung der Kräfte und Momente gewährleistet ist. Allerdings ergeben sich dadurch keinerlei Korrekturmöglichkeiten bezüglich der Höhe und der Winkellage des Rotors bezüglich des Gehäuses. Um genau diesem Punkt gerecht zu werden, umfasst der erfindungsgemässe Aufbau neben den Angriffsstellen am Rotorblock und der Auflage am Schlitten auch Mittel zum Kippen der Konstruktion und zum Ausrichten der Konstruktion bezüglich des Rotorblocks 2.

Die dargestellte Konstruktion aus Profilstangen 61 umfasst in der einfachsten, ersten Ausführungsform ein aus den beiden Profilstangen 611 und 613 gebildetes, L-förmiges Grundgerüst, welches durch die Gewindestange 631 der Befestigungsstelle 63 zu einem C-förmigen Grundträger ergänzt wird. Dieser Grundträger wird an zwei dafür vorgesehenen Stellen des Rotorblocks befestigt, wobei die beiden Befestigungsstellen vorteilhafterweise vertikal voneinander beabstandet sind. Im vorliegenden Fall befinden sich die beiden Befestigungsstellen 63 und 66 oberhalb und unterhalb des Verdichterrades auf etwa gleicher radialer Höhe. Im Bereich der unteren Befestigungsstelle ist eine Montageplatte am freien Ende der Profilstange 611 angeordnet, welche mittels Befestigungsmittel 661 direkt am Vertikalanschlag 26 des Rotorblocks befestigt werden kann. Im Bereich der oberen Befestigungsstelle ist die Gewindestange 631 direkt in eine entsprechende Bohrung 32 im Rotorblock eingeschraubt. Am Rotorblock können die Befestigungsstellen entweder direkt am inneren Lagergehäuse 23 selber angeordnet sein, oder, über eine Abdeckplatte, welche allfällige Unebenheiten, wie beispielsweise eine vorhandene Leitvorrichtung im Diffusorbereich überdeckt. Die Öffnungen für die Befestigungsschrauben 31, mit welchen der Rotorblock am äusseren Lagergehäuse 13 fixiert ist, werden für die Aufnahme der Gewindestange 631 der oberen Befestigungsstelle verwendet. Das erwähnte C-förmige Grundgerüst ist im Schnittbereich der beiden Profilstangen 611 und 613 mit einer Kippstange 62 ausgestattet, welche in einer Aufnahmevorrichtung 532 auf dem Schlitten 53 des Kragträgers 5 drehbar gelagert ist. Die eingesetzte Kippstange 62 wird in der Aufnahmevorrichtung 532 im Betrieb der Hebevorrichtung durch einen Sicherungsbolzen gegen Herausfallen gesichert. Die Kippstange erlaubt eine Kippbewegung der Konstruktion aus Profilstangen 61 und des daran befestigten Rotorblocks. Um das Ausmass der Kippbewegung auf eine bestimmte Winkellage einstellen zu können ist beabstandet von der Kippstange eine vertikale Befestigung 64 des Aufbaus 6 am Schlitten vorgesehen. Die vertikale Befestigung 64 umfasst als Einstellmittel im wesentlichen eine Gewindestange 642 mit einer Mutter 643, einen Horizontalanschlag 644 mit einem Loch zur Aufnahme der Gewindestange sowie einen an der Gewindestange angebrachten Verbindungsstift 641, welcher in einer dafür vorgesehenen Aufnahmevorrichtung 531 am Schlitten 53 angeordnet und ebenfalls im Betrieb gegen herausfallen gesichert ist. Das Loch zur Aufnahme der Gewindestange im Horizontalanschlag 644 ist beabstandet von der vertikal verlaufenden Profilstange 613 des Grundgerüsts angeordnet. Der Horizontalanschlag ist in der ersten Ausführungsform direkt und in der zweiten Ausführungsform, zur verbesserten Kräfteübertragung bei schwereren Rotorblöcken über mehrere Profilstangen 612, 614, 615 und 616 fest mit dem Grundgerüst verbunden. Der von der vertikal verlaufenden Profilstange 613 des Grundgerüsts beabstandete Horizontalanschlag 644 kann mittels Drehen der Mutter 643 mehr oder weniger weit von der Verankerung am Schlitten Verbindungsstift 641 positioniert werden, wodurch sich eine entsprechende Einstellung des Ausmasses der Kippbewegung sowie eine bestimmte Winkellage der Konstruktion aus Profilstangen 62 und des daran befestigten Rotorblocks bezüglich des Kragträgers realisieren lässt. Die mehreren Profilstangen 612, 614, 615 und 616 gemäss der zweiten Ausführungsform sorgen für eine erhöhte Stabilität des Aufbaus 6, welche etwa bei grösseren, schwereren Rotorblöcken von Vorteil sein kann.

Im Bereich der oberen Befestigungsstelle umfasst der Aufbau eine zweite Möglichkeit die Winkellage des am Aufbau befestigten Rotorblocks einzustellen. Die Gewindestange 631 weist neben der Kontermutter 633 zum Einschrauben der Gewindestange 631 in den Rotorblock 2 eine weitere Mutter 632 zur Einstellung der Ausrichtung des Aufbaus bezüglich des Rotorblocks auf. Diese Mutter liegt an einem Vertikalanschlag 634 an. Durch Drehen an der Mutter 632 auf der Gewindestange 631 kann der axiale Abstand zwischen dem Vertikalanschlag 634 und dem Rotorblock eingestellt werden. Verändert sich dieser Abstand hat dies einen Einfluss auf die Winkellage des Rotorblocks bezüglich der Konstruktion aus Profilstangen. Werden die beiden Einstellmöglichkeiten überlagert, ergibt sich die Möglichkeit, den Rotorblock in der Höhe anzuheben, in Ergänzung der Möglichkeit der Anpassung der Winkellage. Ein Kippen der Konstruktion aus Profilstangen 61 um die Achse der Kippstange 62 führt zu einer Veränderten Winkellage des am Aufbau befestigten Rotorblocks. Durch Veränderung des Abstandes zwischen dem Vertikalanschlag 634 und dem Rotorblock lässt sich die veränderte Winkellage wieder korrigieren, wobei dadurch eine Höhenverstellung resultiert.

Somit lässt sich der Rotorblock beim Herausziehen aus dem Gehäuse durch Drehen an den beiden Muttern 632 beziehungsweise 643 bezüglich der Höhe und der Winkellage justieren. Aufgrund des hohen Gewichts des Rotors ist dies insbesondere beim Einbau ein grosser Vorteil, da sonst die Gefahr bestehen würde, dass der Rotor zumindest teilweise am Gehäuse aufliegt und es zu Beschädigungen kommen könnte.

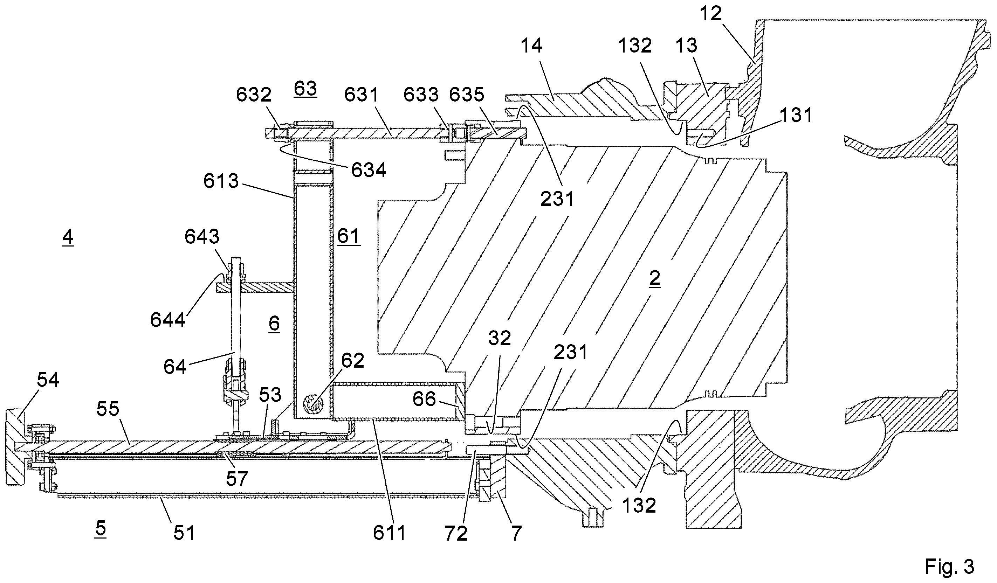

Im Demontagefall wird mittels Abpress-Schrauben 635 der Rotorblock aus dem Zentriersitz im äusseren Lagergehäuse herausgedrückt (abgepresst). Hierfür werden die speziell dafür vorgesehenen Abpress-Schrauben 635 soweit durch die Bohrung 32 hindurch geschraubt, bis die Sitzlänge im Bereich zweier - in Fig. 3 beispielhaft angedeuteten - aufeinander abgestimmten Sitze 132 am äusseren Lagergehäuse 13 und 231 am inneren Lagergehäuse 23 überwunden ist.

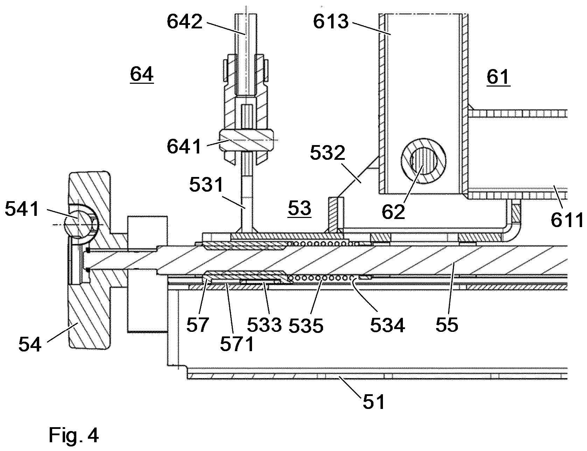

Damit diese axiale Verschiebung bei bereits montierter Hebevorrichtung erfolgen kann, ist für diese erwähnte Sitzlänge wie in Fig. 4 im Detail dargestellt ist ein Freilauf zwischen einer auf der Gewindestange 55 montierten Spindelmutter 57 und dem Schlitten 53 vorgesehen. Die Spindelmutter 57 wird durch Drehen der Gewindestange entlang der Gewindestange bewegt. Die Spindelmutter weist einen nutförmigen Freilaufbereich 571 auf, in welchem ein Vorsprung 533 des Schlittens zwischen zwei Axialanschlägen frei beweglich angeordnet ist. Zur Dämpfung der innerhalb der Axialanschlägen möglichen, freien Bewegung des Schlittens bezüglich der Spindelmutter 57 ist axial zwischen der Spindelmutter und einem Axialanschlag 534 des Schlittens eine Feder 535 auf die Gewindestange aufgezogen. Sobald die Feder 535 des Freilaufs vollständig zusammengedrückt ist, kann mittels Drehen des Spindelrades die Gewindestange 55 gedreht werden und der bewegliche Schlitten 53 wird mitgenommen.

### Bezugszeichenliste

- 11: Gaseintrittsgehäuse der Abgasturbine
- 12: Gasaustrittsgehäuse der Abgasturbine
- 13: Äusseres Lagergehäuse
- 132: Zentriersitz am äusseren Lagergehäuse
- 14: Äusseres Verdichtergehäuse
- 141: Befestigungslöcher
- 142: Befestigungsbolzen
- 2: Rotorblock
- 21: Turbinenrad
- 22: Verdichterrad
- 23: Inneres Lagergehäuse
- 231: Zentriersitz am inneren Lagergehäuse
- 25: Abdeckung für Verdichterrad
- 26: Vertikalanschlag mit Löchern zur Aufnahme von Befestigungsmittel
- 31: Befestigungsmittel zum Befestigen des Rotorblocks am Lagergehäuse
- 32: Bohrung im Rotorblock
- 4: Hebevorrichtung (umfassend 5 und 6)
- 5: Kragträger der Hebevorrichtung, umfassend:
- 51: Tragrahmen
- 52: Schiene
- 53: Schlitten
- 531: Aufnahmevorrichtung für vertikale Befestigung des Aufbaus
- 532: Aufnahmevorrichtung für die Kippstange des Aufbaus
- 533: Vorsprung am Schlitten zur Führung im Freilaufbereich der Spindelmutter 57
- 534: Axialanschlag am Schlitten
- 535: Feder
- 54: Spindelrad
- 541: Kurbel
- 55: Gewindestange (Spindel)
- 56: Montageplatte des Kragträgers zur Befestigung an der Montagekonsole
- 561: Befestigungsmittel
- 57: Spindelmutter
- 571: Nutförmiger Freilaufbereich
- 6: Aufbau der Hebevorrichtung, umfassend:
- 61: Konstruktion aus Profilstangen (611, 612, 613, 614, 615, 616)
- 62: Kippstange des Aufbaus
- 63: Befestigungsstelle (horizontale Befestigung des Aufbaus)
- 631: Gewindestange
- 632: Mutter zur Einstellung der Ausrichtung des Rotorblocks bezüglich der Konstruktion aus Profilstangen
- 633: Kontermutter zum Einschrauben der Gewindestange in den Rotorblock
- 634: Vertikalanschlag
- 635: Abpress-Schraube
- 64: Vertikale Befestigung des Aufbaus
- 641: Verbindungsstift zur vertikalen Befestigung des Aufbaus am Kragträger
- 642: Gewindestange
- 644: Horizontalanschlag
- 643: Mutter zur Einstellung der Ausrichtung der Konstruktion aus Profilstangen bezüglich des Kragträgers
- 66: Befestigungsstelle (Montageplatte des Aufbaus zur Befestigung am Rotorblock)
- 661: Befestigungsmittel
- 7: Montagekonsole
- 71: Löcher in der Montagekonsole zur Aufnahme von Befestigungsmitteln
- 72: Befestigungsmittel

## Patentansprüche

1. Hebevorrichtung (4) zum Verschieben eines in einem Gehäuse eines Abgasturboladers angeordneten Rotorblocks (2) entlang der Drehachse (A) des im Rotorblock (2) enthaltenen Rotors, umfassend
einen Kragträger (5), welcher zur Befestigung an einem Vertikalanschlag eines den Rotorblock (2) umgebenden Gehäuses vorgesehen ist, wobei der Kragträger (5) einen Tragrahmen (51) mit darauf angeordneten Schienen (52) sowie einen auf den Schienen (52) geführten Schlitten (53) umfasst, und
einen Aufbau (6), welcher auf dem Schlitten (53) angeordnet ist, wobei der Aufbau (6) zumindest zwei vertikal beabstandete Befestigungsstellen (63, 66) zur Befestigung des Aufbaus (6) an dem mittels der Hebevorrichtung (4) in dem Gehäuse entlang der axialen Richtung zu verschiebenden Rotorblock (2) umfasst, und wobei die mindestens zwei Befestigungsstellen (63, 66) über einen C-förmigen Grundträger mit dem Schlitten (53) verbunden sind,
wobei eine Auflage des Aufbaus (6) zweiteilig ist und eine Kippstange (62) und eine vertikale Befestigung (64) umfasst, wobei eine Achse der Kippstange (62) senkrecht zu einer Längsachse des Kragträgers und horizontal ausgerichtet ist, und wobei die vertikale Befestigung (64) Mittel zum Einstellen der Ausrichtung des Aufbaus (6) bezüglich des Kragträgers (5) umfasst, so dass die Winkellage des Aufbaus (6) um die Achse der Kippstange (62) einstellbar ist,
wobei am Schlitten (53) Aufnahmevorrichtungen (531, 532) zur Befestigung des an einem Vertikalanschlag (26) des Rotorblocks (2) befestigbaren Aufbaus (6) am Schlitten (53) angeordnet sind, so dass der Aufbau (6) mithilfe des Schlittens (53) entlang der auf dem Tragrahmen (51) des Kragträgers (5) angeordneten Schienen (52) verschiebbar ist,
wobei die zumindest zwei vertikal beabstandeten Befestigungsstellen (63, 66) über den C-förmigen Grundträger mit der Kippstange (62) und der vertikalen Befestigung (64) verbunden sind, wobei diese je unterschiedlich weit von den zumindest zwei vertikal beabstandeten Befestigungsstellen (63, 66) horizontal beabstandet angeordnet sind, wobei der Aufbau (6) mittels der Kippstange (62) und der vertikalen Befestigung (64) an den ebenfalls horizontal voneinander beabstandeten Aufnahmevorrichtungen (531, 532) des Schlittens (53) befestigt ist, und wobei ein Einstellmittel der vertikalen Befestigung (64) direkt oder indirekt fest mit dem C-förmigen Grundträger verbunden ist.

2. Hebevorrichtung (4) nach Anspruch 1, weiter umfassend eine Gewindestange (55), wobei der Schlitten (53) mit einer Spindelmutter (57) verbunden ist, welche auf der Gewindestange (55) angeordnet ist, so dass durch Drehen der Gewindestange (55) sich die Spindelmutter (57) und somit der Schlitten (53) entlang der Gewindestange (55) bewegen lassen, wobei zum Drehen der Gewindestange (55) vorzugsweise ein Spindelrad (54) vorgesehen ist.

3. Hebevorrichtung (4) nach Anspruch 2, wobei zwischen Spindelmutter (57) und dem Schlitten (53) eine Verbindung mit Spiel in Richtung der Gewindestange (55) vorgesehen ist, so dass sich der Schlitten (53) im Rahmen des Spiels relativ zur Spindelmutter (57) entlang der Gewindestange (55) bewegen lässt, auch wenn die Gewindestange (55) nicht gedreht wird.

4. Hebevorrichtung (4) nach einem der Ansprüche 1 bis 3, wobei die mindestens zwei Befestigungsstellen (63, 66) über Profilstangen (611, ..., 616) des C-förmigen Grundträgers mit dem Schlitten (53) verbunden sind.

5. Hebevorrichtung (4) nach Anspruch 4, wobei die zumindest zwei vertikal beabstandeten Befestigungsstellen (63, 66) über die Profilstangen (611, ..., 616) mit der Kippstange (62) und der vertikalen Befestigung (64) verbunden sind.

6. Hebevorrichtung (4) nach einem der Ansprüche 4 oder 5, wobei mindestens eine der zumindest zwei vertikal beabstandeten Befestigungsstellen (63, 66) Mittel zum Einstellen der Ausrichtung des Aufbaus (6) bezüglich eines am Aufbau (6) befestigten Rotorblocks (2) umfasst, wobei diese Mittel vorzugsweise eine Gewindestange (631) und eine Mutter (632) umfassen.

7. Hebevorrichtung (4) nach einem der Ansprüche 4 bis 6, wobei die Mittel zum Einstellen der Winkellage des Aufbaus (6) eine Gewindestange (642) und eine Mutter (643) umfassen, und mittels der Mutter (643) und der Gewindestange (642) die Winkellage des Aufbaus (6) um die Achse der Kippstange (62) eingestellt werden kann.

8. Hebevorrichtung (4) nach einem der Ansprüche 1 bis 7, wobei zur Befestigung des Kragträgers (5) an einem Vertikalanschlag des Gehäuses eine Montagekonsole (7) vorgesehen ist.

9. Verfahren zum Verschieben eines in einem Gehäuse eines Abgasturboladers angeordneten Rotorblocks (2) entlang der Drehachse (A) des im Rotorblock (2) enthaltenen Rotors in ebendiesem Gehäuse mittels einer Hebevorrichtung (4) nach einem der Ansprüche 1 bis 8, umfassend die folgenden Schritte:
- Befestigen des Kragträgers (5) der Hebevorrichtung (4) an einem Vertikalanschlag des Gehäuses,
- Befestigen des Aufbaus (6) der Hebevorrichtung (4) an dem Rotorblock (2),
- Verschieben des Aufbaus (6) entlang des Kragträgers (5).

## Claims

1. Lifting device (4) for moving a rotor block (2) arranged in a housing of an exhaust turbocharger along the axis of rotation (A) of the rotor contained in the rotor block (2), comprising
a cantilever (5) which is provided for fastening to a vertical stop of a housing surrounding the rotor block (2), wherein the cantilever (5) comprises a support frame (51) with rails (52) arranged thereon and a carriage (53) guided on the rails (52), and
a superstructure (6) which is arranged on the carriage (53), wherein the superstructure (6) comprises at least two vertically spaced fastening points (63, 66) for fastening the superstructure (6) to the rotor block (2) to be moved in the housing along the axial direction by means of the lifting device (4), and wherein the at least two fastening points (63, 66) are connected to the carriage (53) via a C-shaped base support,
wherein a support of the superstructure (6) is two-part and comprises a rocker arm (62) and a vertical fastening (64), wherein an axis of the rocker arm (62) is oriented perpendicularly with respect to a longitudinal axis of the cantilever and horizontally, and wherein the vertical fastening (64) comprises means for adjusting the orientation of the superstructure (6) with respect to the cantilever (5), with the result that the angular position of the superstructure (6) is adjustable around the axis of the rocker arm (62),
wherein receiving devices (531, 532) for fastening the superstructure (6) on the carriage (53), which can be fastened to a vertical stop (26) of the rotor block (2), are arranged on the carriage (53), with the result that the superstructure (6) can be moved by means of the carriage (53) along the rails (52) arranged on the support frame (51) of the cantilever (5),
wherein the at least two vertically spaced fastening points (63, 66) are connected via the C-shaped base support with the rocker arm (62) and the vertical fastening (64), each of which is arranged horizontally spaced at different distances from the at least two vertically spaced fastening points (63, 66), wherein the superstructure (6) is fastened by means of the rocker arm (62) and the vertical fastening (64) to the likewise horizontally spaced receiving devices (531, 532) of the carriage (53), and wherein an adjusting means of the vertical fastening (64) is directly or indirectly connected fixedly to the C-shaped base support.

2. Lifting device (4) according to Claim 1, further comprising a threaded rod (55), wherein the carriage (53) is connected to a spindle nut (57) which is arranged on the threaded rod (55), with the result that, by turning the threaded rod (55), the spindle nut (57) and thus the carriage (53) can be moved along the threaded rod (55), wherein a spindle wheel (54) is preferably provided for turning the threaded rod (55).

3. Lifting device (4) according to Claim 2, wherein a connection with play in the direction of the threaded rod (55) is provided between the spindle nut (57) and the carriage (53), with the result that the carriage (53) can be moved within the context of the play relative to the spindle nut (57) along the threaded rod (55), even if the threaded rod (55) is not turned.

4. Lifting device (4) according to one of Claims 1 to 3, wherein the at least two fastening points (63, 66) are connected to the carriage (53) via profile rods (611, ..., 616) of the C-shaped base support.

5. Lifting device (4) according to Claim 4, wherein the at least two vertically spaced fastening points (63, 66) are connected via the profile rods (611, ..., 616) to the rocker arm (62) and the vertical fastening (64).

6. Lifting device (4) according to either of Claims 4 or 5, wherein at least one of the at least two vertically spaced fastening points (63, 66) comprises means for adjusting the orientation of the superstructure (6) with respect to a rotor block (2) attached to the superstructure (6), wherein these means preferably comprise a threaded rod (631) and a nut (632).

7. Lifting device (4) according to one of Claims 4 to 6, wherein the means for adjusting the angular position of the superstructure (6) comprise a threaded rod (642) and a nut (643), and the angular position of the superstructure(6) can be adjusted around the axis of the rocker arm (62) by means of the nut (643) and the threaded rod (642).

8. Lifting device (4) according to one of Claims 1 to 7, wherein a mounting bracket (7) is provided for fastening the cantilever (5) to a vertical stop of the housing.

9. Method for moving a rotor block (2) arranged in a housing of an exhaust turbocharger along the axis of rotation (A) of the rotor contained in the rotor block (2) in precisely this housing by means of a lifting device (4) according to one of Claims 1 to 8, comprising the following steps:
- fastening the cantilever (5) of the lifting device (4) to a vertical stop of the housing,
- fastening the superstructure (6) of the lifting device (4) to the rotor block (2),
- moving the superstructure (6) along the cantilever (5).

## Revendications

1. Dispositif de levage (4) permettant de décaler un bloc de rotor (2) disposé dans un carter d'un turbocompresseur le long de l'axe de rotation (A) du rotor contenu dans le bloc de rotor (2), comprenant
une poutre en porte-à-faux (5) qui est prévue pour être fixée à une butée verticale d'un carter entourant le bloc de rotor (2), dans lequel la poutre en porte-à-faux (5) comprend un cadre porteur (51) avec des rails (52) disposés sur celui-ci ainsi qu'avec un chariot (53) guidé sur les rails (52), et
une structure (6) qui est disposée sur le chariot (53), dans lequel la structure (6) comprend au moins deux points de fixation (63, 66) espacés verticalement pour la fixation de la structure (6) au bloc de rotor (2) à décaler au moyen du dispositif de levage (4) dans le carter le long de la direction axiale, et dans lequel les au moins deux points de fixation (63, 66) sont reliés au chariot (53) par l'intermédiaire d'une poutre de base en forme de C,
dans lequel un support de la structure (6) est en deux parties et comprend une tige de basculement (62) et une fixation verticale (64), dans lequel un axe de la tige de basculement (62) est aligné perpendiculairement à un axe longitudinal de la poutre en porte-à-faux et horizontalement, et dans lequel la fixation verticale (64) comprend des moyens pour régler l'alignement de la structure (6) par rapport à la poutre en porte-à-faux (5) de sorte que la position angulaire de la structure (6) est réglable autour de l'axe de la tige de basculement (62),
dans lequel des dispositifs de réception (531, 532) pour fixer au chariot (53) la structure (6) pouvant être fixée à une butée verticale (26) du bloc de rotor (2) sont disposés au niveau du chariot (53) de sorte que la structure (6) peut être décalée à l'aide du chariot (53) le long des rails (52) disposés sur le cadre porteur (51) de la poutre en porte-à-faux (5),
dans lequel les au moins deux points de fixation (63, 66) espacés verticalement sont reliés à la tige de basculement (62) et à la fixation verticale (64) par l'intermédiaire de la poutre de base en forme de C, dans lequel celles-ci sont disposées de manière horizontalement espacée à différentes distances des au moins deux points de fixation espacés verticalement (63, 66), dans lequel la structure (6) est fixée au moyen de la tige de basculement (62) et de la fixation verticale (64) aux dispositifs de réception (531, 532) du chariot (53), également espacés horizontalement l'un de l'autre, et dans lequel un moyen de réglage de la fixation verticale (64) est relié solidement, de manière directe ou indirecte, à la poutre de base en forme de C.

2. Dispositif de levage (4) selon la revendication 1, comprenant en outre une tige filetée (55), dans lequel le chariot (53) est relié à un écrou de broche (57) qui est disposé sur la tige filetée (55) de sorte qu'une rotation de la tige filetée (55) permet de déplacer l'écrou de broche (57) et donc le chariot (53) le long de la tige filetée (55), dans lequel de préférence un pignon de broche (54) est prévu pour faire tourner la tige filetée (55).

3. Dispositif de levage (4) selon la revendication 2, dans lequel une liaison avec du jeu en direction de la tige filetée (55) est prévue entre l'écrou de broche (57) et le chariot (53) de sorte que le chariot (53) peut être déplacé dans la limite du jeu par rapport à l'écrou de broche (57) le long de la tige filetée (55) même si la tige filetée (55) ne tourne pas.

4. Dispositif de levage (4) selon l'une quelconque des revendications 1 à 3, dans lequel les au moins deux points de fixation (63, 66) sont reliés au chariot (53) par l'intermédiaire de tiges profilées (611, ..., 616) de la poutre de base en forme de C.

5. Dispositif de levage (4) selon la revendication 4, dans lequel les au moins deux points de fixation (63, 66) espacés verticalement sont reliés à la tige de basculement (62) et à la fixation verticale (64) par l'intermédiaire des tiges profilées (611, ... 616).

6. Dispositif de levage (4) selon l'une quelconque des revendications 4 ou 5, dans lequel au moins l'un des au moins deux points de fixation (63, 66) espacés verticalement comprend des moyens de réglage de l'alignement de la structure (6) par rapport à un bloc de rotor (2) fixé à la structure (6), ces moyens comprenant de préférence une tige filetée (631) et un écrou (632).

7. Dispositif de levage (4) selon l'une quelconque des revendications 4 à 6, dans lequel les moyens de réglage de la position angulaire de la structure (6) comprennent une tige filetée (642) et un écrou (643), et l'écrou (643) et la tige filetée (642) permettent de régler la position angulaire de la structure (6) autour de l'axe de la barre de basculement (62).

8. Dispositif de levage (4) selon l'une quelconque des revendications 1 à 7, dans lequel une console de montage (7) est prévue au niveau d'une butée verticale du carter pour la fixation de la poutre en porte-à-faux (5).

9. Procédé permettant de décaler un bloc de rotor (2) disposé dans un carter d'un turbocompresseur le long de l'axe de rotation (A) du rotor contenu dans le bloc de rotor (2) dans ce même carter au moyen d'un dispositif de levage (4) selon l'une quelconque des revendications 1 à 8, comprenant les étapes suivantes consistant à :
- fixer la poutre en porte-à-faux (5) du dispositif de levage (4) à une butée verticale du carter,
- fixer la structure (6) du dispositif de levage (4) au bloc de rotor (2),
- décaler la structure (6) le long de la poutre en porte-à-faux (5).
